# EUROPEAN PATENT SPECIFICATION

(11) **EP 3 827 667 B1**
(45) Date of publication and mention of the grant of the patent: **13.04.2022**
(21) Application number: 19212301.6
(22) Date of filing: 28.11.2019
(51) Int. Cl.: A21C 5/08, A23G 1/04, A23G 3/02, A21C 5/00

(54) **FOOD DEPOSITING APPARATUS**
LEBENSMITTELAUFTRAGUNGSVORRICHTUNG
APPAREIL DE DÉPÔT D'ALIMENTS

(43) Date of publication of application: 02.06.2021
(73) Proprietor: Aasted ApS, 3520 Farum (DK)
(72) Inventor: Prætorius, Michael, 2880 Bagsværd (DK)
(74) Representative: Heiden, Finn

(56) References cited:
- EP-A1- 0 363 184
- EP-A1- 1 661 463
- DE-C- 397 678

## Description

The present invention concerns the field of continuous food depositing apparatuses used in the confectionery or bakery industry comprising an elongated trough, at least one feed roller arranged longitudinally in the trough and in distance of the inside of the trough providing a mass transportation gap extending to at least one longitudinal mass deposit opening at the bottom of the trough, which feed roller periphery comprises a number of longitudinally extending recesses in each of which is arranged a pivotable blade, which is movable between an outer position and an inner position, and which in its outer position is extending outside the periphery of the roller and in its inner position is in the recess and in level with or inside the periphery.

The inventive apparatus is typically an extruder for depositing strands of mass to be cut into size or lumps of mass which could be any type of dough to be baked into cookies, cakes or the like. It could be marzipan, caramel mass, toffee mass or even jam. It could be decorated or even moulded into shape in a further processing step. It could also be confectionery mass, for example chocolate mass with a content of pure cocoa mass or any mass having a content of chocolate-like mass.

Furthermore, dosing means are often arranged below the bottom opening or openings of the trough for shaping the mass as desired. The dosing means could be as a longitudinally extending block with openings and nozzles beneath adapted for extruding strands of mass with the desired cross-section directly at an underlying transport-web. The strands may also be cut by fastmoving knifes or wire.

In the longitudinally extending block may also be arranged pairs of sprocket wheels, sinus rotors or wave-shaped displacers above each opening, which is acting as pumps and controllable to the extent and amount of mass deposited thereby shaping a food product. The pumps are mostly driven by common shafts having axis of rotation extending longitudinally with the trough.

The mass of confectionery or dough is mostly deposited continuously as strands or as gobs or lumps on an underlying conveyor. For example, may rows of lumps of dough be deposited and transported on to a baking oven and possibly further on to stations making final treatments with decorations of masses such as chocolate, chocolate-like recipes or other types of recipes with sugar content. Any type of mass used for decoration purposes on bakery articles apply. When the mass constitutes of confectionery such as chocolate or chocolate-like mass, it is typically deposited for moulding purposes into underlying mould cavities or deposited directly on the conveyor belt.

GB736047 discloses a food depositing apparatus of the introductory art by which two diametrically opposed, longitudinally extending vanes at the roller periphery have rectangularly profiles. A valve roller is arranged in a supporting channel in the bottom of the trough. Half of the materials of the valve roller is removed so that the section of it is a half-circle. The upper edge of the valve roller makes light rubbing contact with the periphery of the feed roller. An arm and a tension spring urges the half-round valve roller to a position in which it lies wholly in its seating so that it is clear of the orbit of the vanes of feed roller when they pass, thereafter returning to a 90°pivoted position for passage of mass to the openings. During the passage of the feed roller vane and the concomitantly turning of the valve roller the geometrical fit between them are not present. Quite large amounts of mass then slip through so that it is not deposited, instead it follows the feed roller up to the mass in the trough once more. It is not desirable to have mass recirculating to the trough in this manner. Especially dough is compressed further so that its texture is changed. Inclusions in the mass may also be stuck in the openings between the rollers.

EP0909534A2 discloses a food extruder having a feed roller arranged longitudinally at the bottom of a trough for transporting the mass in direction against a longitudinal opening. The feed roller has a circular cross-section with a smooth peripheral surface onto which a knifes edge of a longitudinally extending scraper plate slides. The scraper plate is hinged at the opposite longitudinal edge of the plate being inclined to the peripheral surface of the feed roller so that it constitutes the pressure side of the opening being pressed on to the periphery of the feed roller. However, a number of discs are positioned at the feed roller arranged with the same mutual distance along the periphery thereof. The discs fit into radial incisions in the scraper plate. In-between the discs are then provided chambers for extrusion of strands of mass. The construction is complicated and wearing of the many surfaces sliding against each other must reduce the realistic up-time for production before parts have to be refitted. When the mass has content of abrasive particles such as sucker the wear is high. With the wear follows decreasing pressure at the pressure side of the opening as the mass sieves through the increasing gaps created. Decreasing weight accuracy of the extruded mass then follows.

DE245926 discloses a dough depositing apparatus comprising a short trough having a guide wheel arranged in distance of the inside of the trough providing a mass transportation gap extending to a deposit opening at the bottom of the trough.

The guide wheel has a number of radially extending slits carrying stiff knife blades extending further radially out from the periphery of the wheel. A cam is fixed to the apparatus and in relation to each knife blade is arranged a knob or a spring with a knob. During rotation of the guide wheel the knobs of the knife blades engage with the cam when the particular knife blade has passed the deposit opening. As a consequence of the cam guiding the knob during further rotation of the wheel, the knife blade is pulled radially into the guide wheel. This proceeds until the outer end of the blade is safe inside the periphery of the wheel and the blade has left the opening and passed into the trough. In the trough the blade is again pushed radially outwards for maximum engagement with the dough in the trough. The mechanism of the guide wheel with the knobs and the springs are complicated and not constructed for a higher output in industrial production.

EP1661463A1 discloses a food depositing apparatus of the introductory type by which the blades are flexible impeller blades made of elastic material. The front edges of the flexible blades are fixed permanently in the front side of the recesses so that the blades extend radially out from the recesses. The trailing edges of the flexible blades are then outside the periphery of the roller. During rotation of the roller the trailing edges of the blades are bending as they sweep over the various contours of the inside of the trough. When the blades pass raised surfaces of the inside of the trough the blades may bend into the recesses. The flexible blades allow gentle handling of dough with ingredients such as nuts, chocolate pieces at the same ensuring that the texture of the dough is not being influenced. However, the elastic materials applied for the flexible blades are expensive and exposed to wear when mass such as dough for cookies and marzipan with high content of abrasive sugar crystals are handled.

DE 397 678 C and EP 0 363 184 A1 show further examples of food depositing rollers with movable blades.

The operating economy of the food depositing apparatus of the introductory art is especially dependent on the wearability and extension of service intervals of the blades arranged at the roller. Great efforts are exerted by constructors of food extruders to optimize these two factors.

The inventive solution is characterised in, that the trailing edges of the blades are maintained in engagement with the trailing sides of the recesses thereby providing the pivots, and so that the front edges of the blades are radially movable by the pivotable movements.

During revolution of the feed roller through the trough, the pivotable blades are pivoted to their outer position thereby gripping the mass in the trough. The blades are thereby transporting mass from the trough and through the mass transportation gap towards the longitudinal mass deposit opening. When passing over the mass deposit opening the particular blades are returned to its inner position and the mass is continuously exposed through the opening. Having left the opening, the particular blade is in its inner position in the recess and in level with or inside the periphery when passing over the close inside of the trough. During the continued angular movement of the blade it again pivots towards the outer position as it enters the mass in the trough.

Any ingredients in the mass such as nuts, chocolate pieces or other types of ingredients are gently swept into the gap without any impact on the ingredients. In the gap large volume is present in between the neighbouring blades sweeping through the mass transportation gap. Then, large amount of mass with or without ingredients are transported at the same time towards the dosing means. This ensures, that the texture of the mass is not being influenced, which is especially important when dough is treated.

The pivotable arrangement of the blades is a safeguard for avoiding major pressure building up in the mass. During revolution of the roller, the impeller blades presently in the gap is able to pivot aside if pressure exceeding a certain limit is building up in the gap. Some of the mass or ingredients present in the gap then avoids the transporting action of the impeller blades.

The blades may be made of any materials adapted for the particular mass properties and which suits the particular purpose of use.

When handling mass with an abrasive content, such as sugar, the pivotable arrangement makes it possible to use blades made of materials with high resistance against abrasive wear, such as for example steel materials or laminated epoxy materials having long lasting wear resistance against mass with abrasive ingredients. The blades can potentially last for many hours of use longer than those made of flexible materials as applied by the prior art.

The service intervals are then extremely extended in comparison to the prior art. The apparatus is fast and simple to dismantle, clean and rearrange again for new production. In the long run, the inventive apparatus then becomes especially economic in use.

Hereby is obtained a food depositing apparatus that provides an especially advantageous operating economy.

When an upper, stationery disk cam is arranged and fixed at least at one end of the trough, the peripheral edge of the disk cam is supporting the end of the blades during their pivot towards the outer position in a firm and consistent manner. The pattern of movement of the blade is then exactly defined by the edge of the disc cam which ensures that the blade proceeds to engage the mass in the trough.

When the maximum radial distance of the peripheral edge of the disk cam from the center of rotation of the roller is at the upper part of the roller in the trough, preferable at the vertical top of the roller in the trough, a maximum of engagement is ensured for the blade in the mass during its travel through the mass.

Advantageously, the front side of the recesses have a thickening at the roller periphery so that the inner edge of the blade is in engagement under the thickening when the blade is in its outermost position. A simple manner of ensuring that the blade has a stop in its outermost radial position.

When the sections of the blades are triangular in shape with a front surface extending between the outer front edge and the inner edge they are both simple to manufacture of solid bar materials and is provided with an effective shape for exerting pressure at the mass.

When the front surfaces of the triangular shape of the blades are concave and defines an acute angle with the outer surface of the blade at the outer front edge, then the blade is exposed to a force component that is pressing the blade radially outwards so that the blade is maintained in the outermost position. In addition, the mass is flowing slightly over the front surface of the blade in direction away from the blade tip and towards the roller periphery providing for relief of the blade tip and the possibility of leak between the edge of the blade tip and the inside of the trough.

A relief of the pressure against the blade is obtained when the blade has a number of radially extending holes evenly distributed along its extension. When the blade is returned to its inner position in the recess the mass in the recess simply bails out of the recess through the holes when the blade is pivoted into the recess.

When at least one lower disc cam is arranged radially outside the blades at the mass deposit opening at the bottom of the trough providing a guiding edge extending with a curve radially inwards in the direction of rotation away from the deposit opening, then the blade is in simple manner guided along a predetermined at safe curve to its innermost position in the recess before passing the pressure tight position of an extruder.

When the roller comprises at least six longitudinally extending recesses in each of which is arranged a pivotable blade, effective pressure tight chambers between two opposite blades are obtained, so that an effective extruder is obtained. At least two blades are always fully exposed to the mass in the trough so that the mass is safely caught in between the blades thereafter being transported further towards the opening. The performance of the apparatus is then consistently linear in the output flow of the deposited mass.

When the trough comprises a further longitudinally extending, auxiliary roller arranged above the transportation gap and close to the inside of the trough the pressure for transporting the mass is better to build up for more liquid mass. The extruder is then especially advantageous for mass with a low inner shear force and high inner smearing such as cookies dough and marzipan.

The invention is explained further below by reference to preferred embodiments as well as the drawing, in which
fig. 1 discloses schematically in perspective an apparatus according to the invention and an underlying conveyor onto which the mass is continuously deposited as articles in rows,
fig. 2 the apparatus of fig. 1, seen in vertical section of the trough,
fig. 3 schematically, seen from the end in vertical section, the right trough of the apparatus, in which is arranged a feed roller having eight blades,
fig. 4 schematically and in perspective the end part of one of the blades, disclosed in fig. 3,
fig. 5 schematically and in vertical section part of the roller of fig. 3 disclosing one of the blades arranged in a recess and pivoted to its outer position,
fig. 6 in perspective and in greater detail the roller of fig. 3 having eight blades arranged in longitudinally recesses at the periphery,
fig. 7 in perspective and in exploded view the arrangement of an outer cam disc at the end of the roller of figures 3-6,
fig. 8 the same as in figure 3-7, seen as in figure 3, disclosing the geometrical arrangement of the cam disc,
fig. 9 schematically the functionality of the roller and blades of figures 3-7 with mass in the trough, and
fig. 10 schematically, in greater detail and in section the functionality of the blades at the deposit opening.

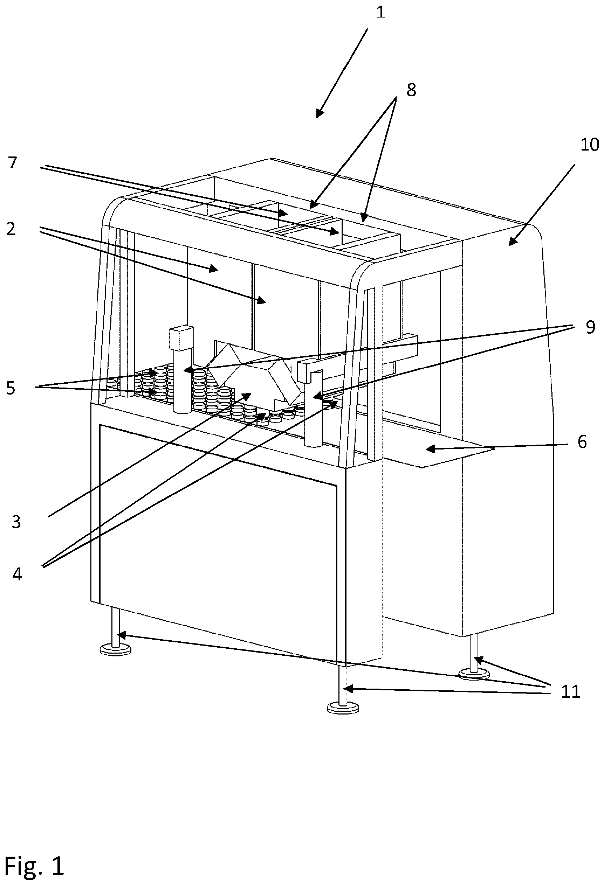

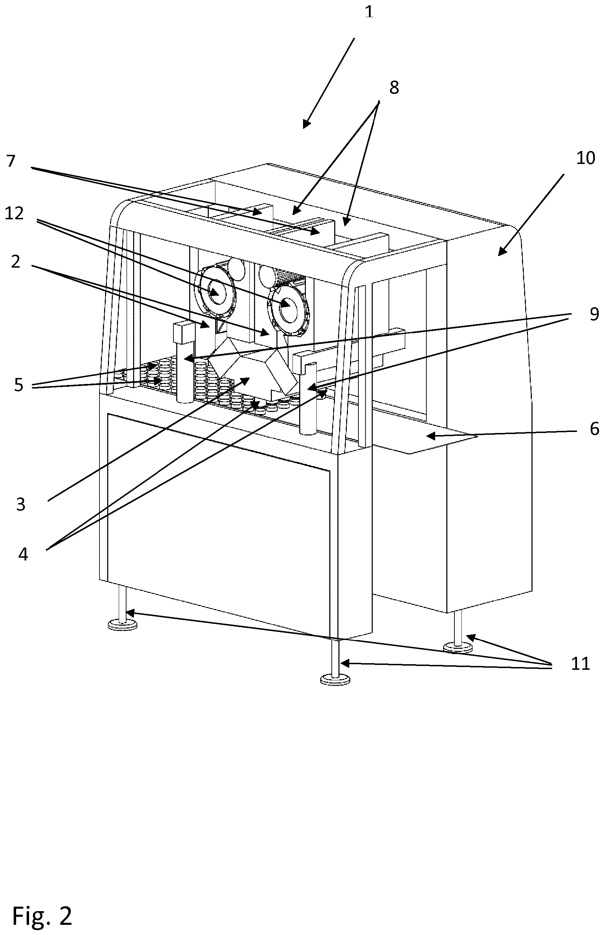

The inventive food depositing apparatus 1 schematically disclosed in fig. 1 and 2 comprises two elongated troughs 2, which contains the edible mass to be deposited. At the depicted embodiment two troughs 2 are arranged in a mirrored like manner having a common, longitudinally extending block 3 with non-disclosed inside channels and openings leading to nozzles 4 beneath adapted for extruding strands of mass with the desired cross-section. The strands are cut by non-disclosed wire cutters into the precise articles 5, which are falling on to an underlying conveyor 6.

The inventive solution applies for each separate trough 2, whether it is a single trough 2 in a production machine or whether there are two or more troughs 2 with different masses arranged in the same apparatus, typically for depositing articles combined of different mass types or colours.

Above each nozzle 4 in the longitudinally extending block 3 may also be arranged pairs of sprocket wheels or wave-shaped displacers which are acting as pumps. They are controllable so that the desired extent and amount of mass deposited are obtained thereby shaping fine food products 5. Such pumps are mostly driven by a common shaft and electric motor having axis of rotation extending longitudinally with the troughs 2.

The troughs 2 have an opening 7 at the top 8 and when the mass to be deposited is kneaded dough, it is typically put into the troughs 2 as great lumps via the opening 7 at the top 8. However, the confectionery mass could also be continuously feed to the through 2 via tubes when it has sufficient flow ability such as for example liquid chocolate has.

By the disclosed example the mass is deposited as articles or lumps 5 of mass consequently arranged in rows at the conveyor 6, which moves further on after each dosing operation. The conveyor 5 could be moved on continuously or with intermittent start-stop movements. The mass is typically confectionery or dough.

The rows of lumps 5 of mass are transported on to a baking oven when we are talking about dough, and possibly further on to stations making final treatments with decorations of masses such as chocolate or chocolate-like recipes. When the mass constitutes of confectionery such as toffee, caramel or chocolate or chocolate-like mass, the mass is then typically deposited for moulding purposes into underlying mould cavities or directly on the conveyor 6 as depicted in fig. 1 and 2.

The troughs 2 are carried and positioned by columns 9, which are engaged by a support frame inside the housing 10. The apparatus 1 is positioned by adjustable feet 11 at the factory floor.

Each trough 2 comprises at least one feed roller 12 arranged longitudinally in the trough 2 for transporting the mass in direction against at least one longitudinal mass deposit opening 13 at the bottom 14 of the trough 2, as schematically disclosed in figures 2, 3, 8 and 9.

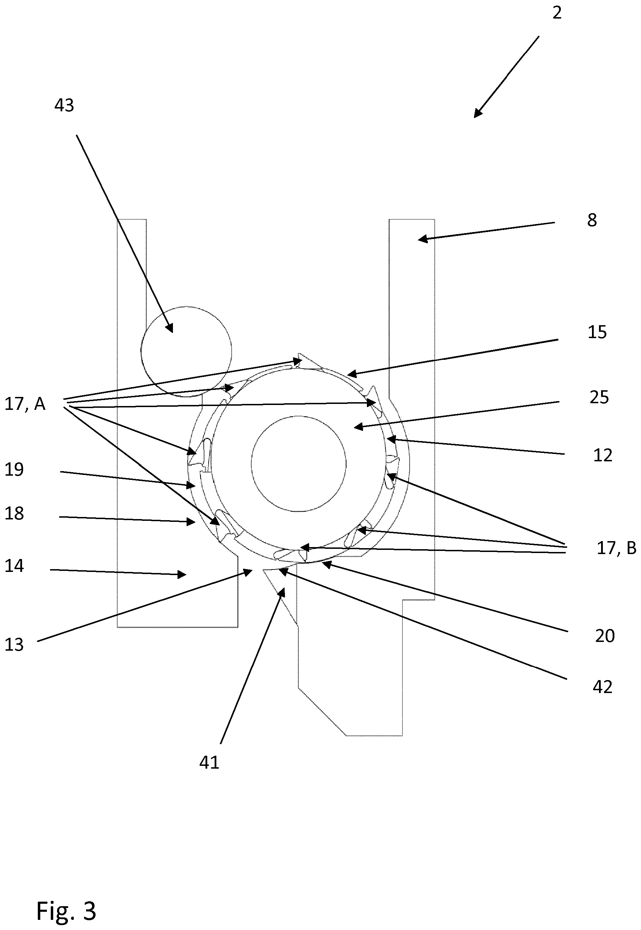

The right trough 2 of figures 1 and 2 is schematically disclosed in figures 3, 8 and 9, as the longitudinal block 3 with the common channels and nozzles 4 is removed for ease of clarity explaining the inventive solution.

The periphery 15 of the feed roller 12 comprises a number of longitudinally extending recesses 16 in each of which is arranged a pivotable blade 17.

The feed roller 12 is arranged with its periphery 15 in distance of the left inside 18 of the trough 2. Thereby is provided a mass transportation gap 19 extending from the top 8 of the trough and to the longitudinal mass deposit opening 13 at the bottom 14 of the trough 2.

At the right inside 20 of the trough 2, the periphery 15 of the feed roller 12 is as close as possible to the inside 20, for providing a pressure tight side of the opening 13. The distance between the periphery 15 and the inside of the trough 2 is at the right side typically a few tenths of a millimetre along a short distance.

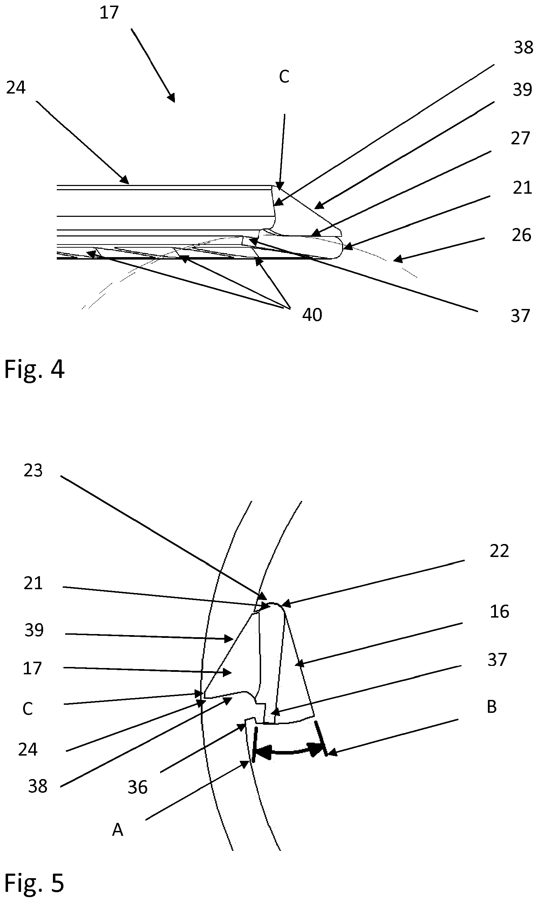

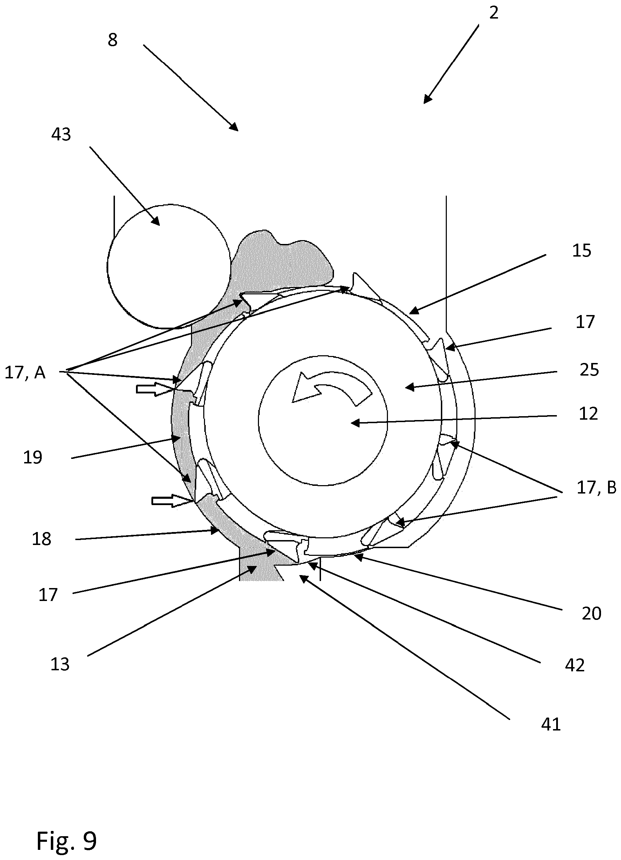

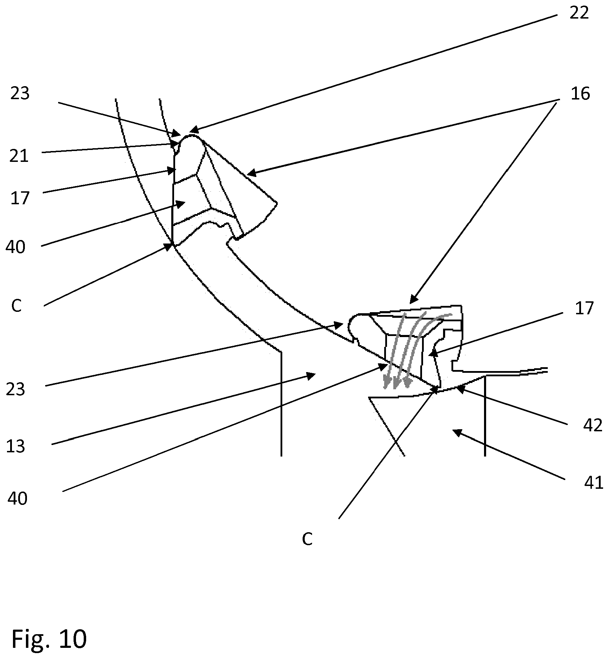

Each blade 17 is movable between an outer position A as depicted at the top and the left side of the roller in figures 3, 5, 6, 9 and 10, and an inner position B as depicted at the bottom and lower right side of the roller in figures 3 and 9. In the outer position A each blade 17 is extending outside the periphery of the roller 12 and in its inner position B the blade 17 is completely inside the periphery 15 in the recess 16. The trailing edges 21 of the blades 17 are maintained in engagement with the trailing sides 22 of the recesses 16 thereby providing a pivot 23 as disclosed in detail in figures 5, 10. The front edges 24 of the blades 17 are then radially movable by the pivotable movements of the blades 17.

The sectional shape of the trailing edge 21 of the blade 17 and the sectional shape of the trailing side 22 of the recess 16 are both arcuate and advantageously corresponds to each other as disclosed in detail in figures 5 and 10.

An upper disc cam 25 is arranged fixed at the one end of the trough 2 as disclosed in figures 3, 6, 7, 8 and 9. The peripheral edge 26 of the disc cam 25 supports the ends 27 of the blades 17 during their pivot towards the outer position as disclosed in figures 3 and 9 . In figure 4 is schematically disclosed how the end 27 engages with the peripheral edge 26 of the cam disc 25.

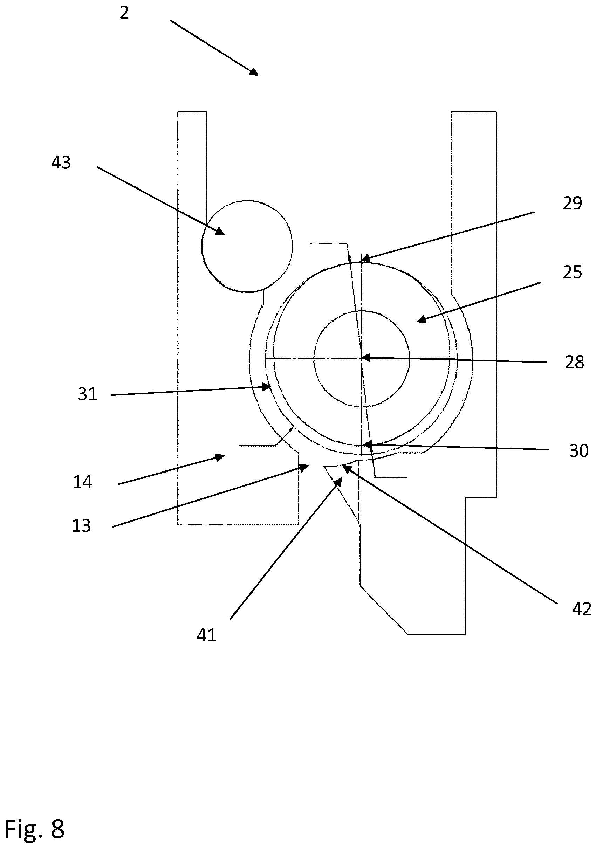

The maximum radial distance of the peripheral edge 26 of the disc cam from the centre of rotation 28 of the roller is at the upper part of the roller in the trough, preferable at the vertical top 29 of the roller as disclosed schematically in figure 8. The radial distance of the peripheral edge 26 of the disc cam 25 from the centre of rotation 28 of the roller 12 then gradually decreases from the vertical top 29 and through the 180° progress towards the vertical bottom 30 of the disc cam 25. The upper disc cam 25 is mirrored about vertical, so that the peripheral edges 26 at the left side of vertical is mirrored with that at the right side of vertical. For the sake of comparison is with punctured line 31 depicted a complete circle having a radius equal to the maximum radius of the peripheral edge 26 of the cam disc 25.

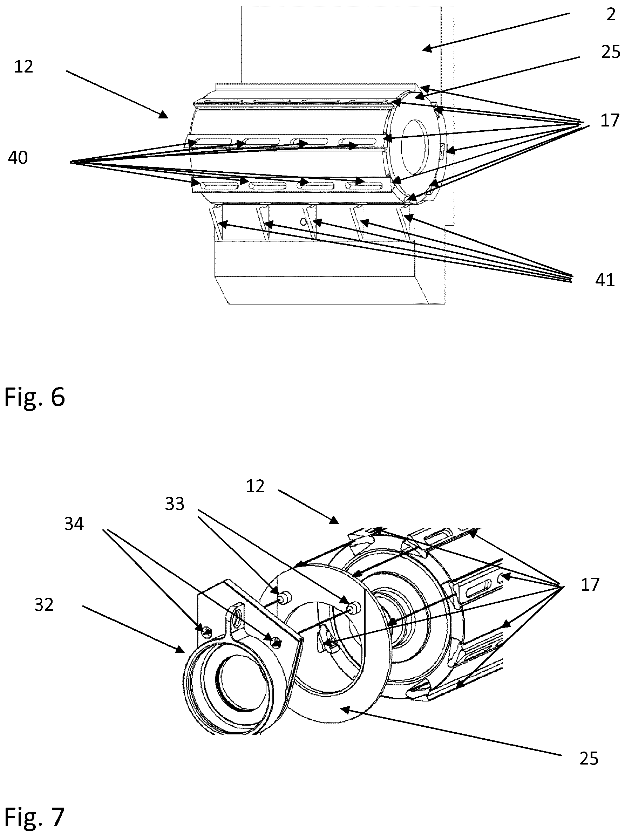

The upper disc cam 25 is mounted to a fixed part 32 of the trough 2 by a firm engagement of two dowels 33 engaging into holes 34 in the fixed part 32 as disclosed in figure 7.

The front sides 35 of the recesses 16 have a thickening 36 at the roller periphery 15. The inner edge 37 of the blades 17 are then in safe and firm engagement under the thickening 36 when the blades 17 are in their outermost positions A, i.e. figures 4 and 5.

The sections of the blades 17 are triangular in shape having a front surface 38 extending with a concave progression between the outer front edge 24 and the inner front edge 37 of the blades 17. Thereby is defined an acute angle C between the concave front surface 38 and the outer surface 39 of the blade 17 as depicted in figures 4 and 5.

Each of the blades 17 have a number of radially extending holes 40 evenly distributed along the extension of each blade 17, i.e. figures 4, 6, 7 and 10. The holes 40 ensures that mass can escape from the recesses 16 when the blades 17 pivot from the outer position to the inner position in the recess.

A number of lower disc cams 41 are arranged radially outside the blades 17 at the mass deposit opening 13 at the bottom of the trough 2, i.e. figures 3, 6, 8, 9 and 10. In figure 6 is schematically depicted that a number of five lower disc cams 41 are arranged evenly distributed along the side of the through 2. The spaces between the disc cams 41 are typically filled out with blocks of solid material not disclosed for the sake of simplicity. The disc cams 41 are permanently fixed to the trough 2.

The lower disc cams 41 provide guiding edges 42 extending with a curve radially inwards in the direction of rotation away from the deposit opening 13. The front edges 24 of the blades 17 slides over the guiding edges 42 when passing by.

The trough 2 comprises a further longitudinally extending, auxiliary roller 43 arranged above the mass transportation gap 19 and close to the inside of the trough as depicted in figures 3, 8 and 9.

The function wise of the apparatus is described under reference to the preferred embodiment disclosed in the figures 1-10.

The feed roller 12 of figures 3-10 rotates anti-clockwise. However, it could also rotate clockwise, it would just require that the design of the trough, roller, recesses and blades are arranged mirrored. This is the matter for the left trough 12 depicted in figure 2.

The trough 2 is filled with mass as schematically depicted in figure 9. For the sake of clarity the mass is not depicted in the remaining figures.

When passing over the right inside 20 of the trough the blades 17 are fully pivoted into their particular recess16 then being in their inner position B completely inside the periphery 15 of the roller 12, i.e. figures 3 and 9. During further angular movement the ends 27 of the blades 17 are sliding along the peripheral edge 26 of the upper disc cam 25 and gradually pivots towards the outer position as it enters the mass in the bottom 14 of the mass trough 2.

Having reached the top position in the trough 2 the blades are in their fully outer position A as depicted in figures 3, 4 and 9. The acute angle C of the front edges 24 of the blades 17 in combination with the concave front surfaces 38 of the blades 17 ensures that the blades are exerted to a radially outwards directed force that maintains the blades in their outer position A during further angular movement through the mass in the bottom 14 of the trough 2. The thickening 36 at the roller periphery extends slightly over the recess 16 so that the inner edge 37 of the blades 17 is halted in further radial movement of a pivoting blade 17 as the inner edge 37 engages the thickening 36. The blades 17 then have a firm stop in their outer position A as they grab mass during passing through the mass in the trough 2, i.e. as depicted in figure 5.

Entering the mass transportation gap 19 the blades 17 are then maintained in their fully outer position A. Mass is completely filling out the volume in-between two blades 17 in their outer positions as they continuously and simultaneously are passing through the gap 19 during further rotation of the feed roller 12. By simultaneously means that two blades are always in the mass transportation gap 19 at the same time. Basically, it means, that at least six blades must be arranged around the roller periphery 15. Preferably are eight blades arranged as in the present embodiment. The mass is then transported continuously from the bottom of the trough 2, through the transportation gap 19 and extruded through the deposit opening 13 in a safe and linear manner, even at high capacities and when the mass has content of inclusions such as pieces of nuts, fruit, or chocolate.

Having passed over the opening 13, the blades 17 pivoted radially inwards as the front edges 24 of the blades 7 glides over the guiding edge 42 of the lower disc cam 41. During the pivot mass leaves the recesses 17 through the holes 40 in the blades 17 as depicted in figure 10. Having pivoted to their inner position B the blades 17 maintains that position until the edge 26 of the upper disc cam 25 guides the ends 27 of the blades 17, so that they start pivoting outwards again, just before entering the mass in the bottom 14 of the trough 2. One revolution of the described blades 17 are then complete.

The essential features of the apparatus ensure that it is exceptionally resistant to wear from mass with abrasive content, such as sugar. Especially the pivotable arrangement makes it possible to use blades made of materials having high resistance against abrasive wear. The blades 17 and the roller are made of stainless steel or hard-anodized aluminium. The apparatus is then highly reliable and periods between maintenance are extremely long in comparison with the prior art having flexible blades of elastic materials, typically more than 10 times longer.
- 1:: food depositing apparatus
- 2:: trough
- 3:: block
- 4:: nozzles
- 5:: articles
- 6:: conveyor
- 7:: opening
- 8:: top of trough
- 9:: columns
- 10:: housing
- 11:: adjustable feet
- 12:: feed roller
- 13:: mass deposit opening
- 14:: bottom of trough
- 15:: feed roller periphery
- 16:: recess
- 17:: blade
- 18:: left inside of trough
- 19:: mass transportation gap
- 20:: right inside of trough
- 21:: trailing edge of blade
- 22:: trailing side of recess
- 23:: pivot
- 24:: front edges of blades
- 25:: upper disc cam
- 26:: peripheral edge of disc cam
- 27:: ends of blades
- 28:: centre of rotation
- 29:: vertical top
- 30:: vertical bottom
- 31:: punctured line of complete circle
- 32:: fixed part of trough
- 33:: dowels
- 34:: holes

- 35:: front side of recess
- 36:: thickening at the roller periphery
- 37:: inner edge of blade
- 38:: concave front surface of blade
- 39:: outer surface of blade
- 40:: holes through blades
- 41:: lower disc cam
- 42:: guiding edge of lower disc cam
- 43:: auxiliary roller

- A:: outer position in fig. 3, 5, 6, 9 and 10
- B:: inner position in fig. 3 and 9
- C:: acute angle

## Claims

1. Food depositing apparatus (1) comprising an elongated trough (2), at least one feed roller (12) arranged longitudinally in the trough (2) and in distance of the inside (18) of the trough (2) providing a mass transportation gap (19) extending to at least one longitudinal mass deposit opening (13) at the bottom (14) of the trough (2), which feed roller periphery (15) comprises a number of longitudinally extending recesses (16) in each of which is arranged a pivotable blade (17), which is movable between an outer position (A) and an inner position (B), and which in its outer position (A) is extending outside the periphery (15) of the roller (12) and in its inner position (B) is in the recess (16) and in level with or inside the periphery (15), **characterised in, that** the trailing edges (21) of the blades (17) are maintained in engagement with the trailing sides (22) of the recesses (16) thereby providing the pivots (23), and so that the front edges (24) of the blades (17) are radially movable by the pivotable movements.

2. Apparatus according to claim 1, **characterised in, that** an upper, stationery disk cam (25) is arranged and fixed at least at one end of the trough (2), the peripheral edge (26) of the disk cam (25) supporting the end (27) of the blades (17) during their pivot towards the outer position (A).

3. Apparatus according to claim 2, **characterised in, that** the maximum radial distance of the peripheral edge (26) of the upper disk cam (25) from the center of rotation (28) of the roller (12) is at the upper part of the roller in the trough (2), preferable at the vertical top of the roller (12) in the trough (2).

4. Apparatus according to one or more of claims 1-3, **characterised in, that** the front side (35) of the recesses (16) have a thickening (36) at the roller periphery (15) so that the inner edge (37) of the blade (17) is in engagement under the thickening (36) when the blade (17) is in its outermost position.

5. Apparatus according to one or more of claims 1-4, **characterised in, that** the sections of the blades (17) are triangular in shape with a front surface (38) extending between the outer front edge (24) and the inner edge (37).

6. Apparatus according to one or more of claims 1-5, **characterised in, that** the front surfaces (38) of the triangular shape of the blades (17) are concave and at the outer front edge (24) defines an acute angle ( C ) with the outer surface (39) of the blade (17).

7. Apparatus according to one or more of claims 1 -6, **characterised in, that** the blade (17) has a number of radially extending holes (40) evenly distributed along its extension.

8. Apparatus according to one or more of claims 1-7, **characterised in, that** at least one lower disc cam (41) is arranged radially outside the blades (17) at the mass deposit opening (13) at the bottom (14) of the trough (2) providing a guiding edge (42) extending with a curve radially inwards in the direction of rotation away from the deposit opening (13).

9. Apparatus according to one or more of the claims 1-8, **characterised in, that** the roller (12) comprises at least six longitudinally extending recesses (16) in each of which is arranged a pivotable blade (17).

10. Apparatus according to one or more of the claims 1-9, **characterised in, that** the trough (2) comprises a further longitudinally extending, auxiliary roller (43) arranged above the transportation gap (19) and close to the inside (18) of the trough (2).

## Patentansprüche

1. Lebensmittelauftragungsvorrichtung (1), umfassend eine Wanne (2), mindestens eine Zuführrolle (12), die in Längsrichtung in der Wanne (2) und von der Innenseite (18) der Wanne (2) beabstandet angeordnet ist, wodurch ein Massentransportspalt (19) bereitgestellt wird, der sich zu mindestens einer Längsmassenauftragungsöffnung (13) am Boden (14) der Wanne (2) erstreckt, wobei der Zuführrollenumfang (15) eine Anzahl von sich in Längsrichtung erstreckenden Aussparungen (16) umfasst, in der jeweils eine schwenkbare Klinge (17) angeordnet ist, die zwischen einer Außenposition (A) und einer Innenposition (B) beweglich ist und die sich in ihrer Außenposition (A) außerhalb des Umfangs (15) der Rolle (12) erstreckt und sich in ihrer Innenposition (B) in der Aussparung (16) und auf gleicher Höhe mit dem oder innerhalb des Umfang(s) (15) erstreckt,
**dadurch gekennzeichnet, dass**
die Hinterkanten (21) der Klingen (17) in Eingriff mit den Hinterseiten (22) der Aussparungen (16) gehalten werden, wodurch die Drehgelenke (23) bereitgestellt werden, und so dass die Vorderkanten (24) der Klingen (17) durch die Schwenkbewegungen radial beweglich sind.

2. Vorrichtung nach Anspruch 1, **dadurch gekennzeichnet, dass** eine obere, stationäre Kurvenscheibe (25) mindestens an einem Ende der Wanne (2) angeordnet und fixiert ist, wobei der Umfangsrand (26) der Kurvenscheibe (25) das Ende (27) der Klingen (17) während ihres Schwenkens zu der Außenposition (A) stützt.

3. Vorrichtung nach Anspruch 2, **dadurch gekennzeichnet, dass** sich der maximale radiale Abstand des Umfangsrands (26) der oberen Kurvenscheibe (25) von der Drehmitte (28) der Rolle (12) am oberen Teil der Rolle in der Wanne (2), vorzugsweise am vertikal oberen Ende der Rolle (12) in der Wanne (2), befindet.

4. Vorrichtung nach einem oder mehreren der Ansprüche 1-3, **dadurch gekennzeichnet, dass** die Vorderseite (35) der Aussparungen (16) eine Verdickung (36) am Rollenumfang (15) aufweist, so dass die Innenkante (37) der Klinge (17) unter der Verdickung (36) in Eingriff steht, wenn sich die Klinge (17) in ihrer äußersten Position befindet.

5. Vorrichtung nach einem oder mehreren der Ansprüche 1-4, **dadurch gekennzeichnet, dass** die Abschnitte der Klingen (17) eine dreieckige Form aufweisen, wobei sich eine vordere Fläche (38) zwischen der äußeren Vorderkante (24) und der Innenkante (37) erstreckt.

6. Vorrichtung nach einem oder mehreren der Ansprüche 1-5, **dadurch gekennzeichnet, dass** die vorderen Flächen (38) der dreieckigen Form der Klingen (17) konkav sind und an ihrer äußeren Vorderkante (24) mit der Außenfläche (39) der Klinge (17) einen spitzen Winkel (C) definieren.

7. Vorrichtung nach einem oder mehreren der Ansprüche 1-6, **dadurch gekennzeichnet, dass** die Klinge (17) eine Anzahl von sich radial erstreckenden Löchern (40) aufweist, die entlang ihrer Erstreckung gleichmäßig verteilt sind.

8. Vorrichtung nach einem oder mehreren der Ansprüche 1-7, **dadurch gekennzeichnet, dass** mindestens eine untere Kurvenscheibe (41) radial außerhalb der Klingen (17) an der Massenauftragungsöffnung (13) am Boden (14) der Wanne (2) angeordnet ist, wodurch eine Führungskante (42) bereitgestellt wird, die sich in einer Kurve radial nach innen in der Drehrichtung von der Auftragungsöffnung (13) weg erstreckt.

9. Vorrichtung nach einem oder mehreren der Ansprüche 1-8, **dadurch gekennzeichnet, dass** die Rolle (12) mindestens sechs sich in Längsrichtung erstreckende Aussparungen (16) umfasst, wobei in jeder eine schwenkbare Klinge (17) angeordnet ist.

10. Vorrichtung nach einem oder mehreren der Ansprüche 1-9, **dadurch gekennzeichnet, dass** die Wanne (2) ferner eine sich in Längsrichtung erstreckende, zusätzliche Rolle (43) umfasst, die über dem Transportspalt (19) und nahe der Innenseite (18) der Wanne (2) angeordnet ist.

## Revendications

1. Appareil de dépôt de produit alimentaire (1) comprenant une goulotte allongée (2), au moins un rouleau d'alimentation (12) disposé longitudinalement dans la goulotte (2) et à distance de l'intérieur (18) de la goulotte (2) formant un intervalle de transport de masse (19) s'étendant jusqu'à au moins une ouverture de dépôt de masse longitudinale (13) au niveau de la partie inférieure (14) de la goulotte (2), la périphérie (15) dudit rouleau d'alimentation comprenant un certain nombre de renfoncements s'étendant longitudinalement (16) dans chacun desquels est disposée une lame pivotante (17), qui est mobile entre une position extérieure (A) et une position intérieure (B), et qui, dans sa position extérieure (A), s'étend à l'extérieur de la périphérie (15) du rouleau (12) et, dans sa position intérieure (B), se situe dans le renfoncement (16) et dans l'alignement ou à l'intérieur de la périphérie (15),
**caractérisé en ce que**
les bords arrière (21) des lames (17) sont maintenus en prise avec les bords arrière (22) des renfoncements (16) et forment ainsi les pivots (23), et de telle sorte que les bords avant (24) des lames (17) soient mobiles radialement par le biais des mouvements de pivotement.

2. Appareil selon la revendication 1, **caractérisé en ce qu'**une came-disque stationnaire supérieure (25) est disposée et fixée à au moins une extrémité de la goulotte (2), le bord périphérique (26) de la came-disque (25) supportant l'extrémité (27) des lames (17) lors de leur pivotement vers la position extérieure (A).

3. Appareil selon la revendication 2, **caractérisé en ce que** la distance radiale du bord périphérique (26) de la came-disque supérieure (25) vis-à-vis du centre de rotation (28) du rouleau (12) est maximale au niveau de la partie supérieure du rouleau dans la goulotte (2), de préférence au niveau du sommet vertical du rouleau (12) dans la goulotte (2).

4. Appareil selon une ou plusieurs des revendications 1 à 3, **caractérisé en ce que** le côté avant (35) des renfoncements (16) présente un épaississement (36) au niveau de la périphérie du rouleau (15) de telle sorte que le bord intérieur (37) de la lame (17) soit en prise sous ledit épaississement (36) lorsque la lame (17) se trouve dans sa position extérieure extrême.

5. Appareil selon une ou plusieurs des revendications 1 à 4, **caractérisé en ce que** les sections des lames (17) sont de forme triangulaire avec une surface avant (38) s'étendant entre le bord avant extérieur (24) et le bord intérieur (37).

6. Appareil selon une ou plusieurs des revendications 1 à 5, **caractérisé en ce que** les surfaces avant (38) de la forme triangulaire des lames (17) sont concaves et définissent, au niveau du bord avant extérieur (24), un angle aigu (C) avec la surface extérieure (39) de la lame (17) .

7. Appareil selon une ou plusieurs des revendications 1 à 6, **caractérisé en ce que** la lame (17) comporte un certain nombre de trous s'étendant radialement (40) uniformément répartis le long de son étendue.

8. Appareil selon une ou plusieurs des revendications 1 à 7, **caractérisé en ce qu'**au moins une came-disque inférieure (41) est disposée radialement à l'extérieur des lames (17) au niveau de l'ouverture de dépôt de masse (13) au niveau de la partie inférieure (14) de la goulotte (2) et forme un bord de guidage (42) s'étendant avec une courbe radialement vers l'intérieur dans la direction de rotation s'éloignant de l'ouverture de dépôt (13).

9. Appareil selon une ou plusieurs des revendications 1 à 8, **caractérisé en ce que** le rouleau (12) comprend au moins six renfoncements s'étendant longitudinalement (16) dans chacun desquels est disposée une lame pivotante (17).

10. Appareil selon une ou plusieurs des revendications 1 à 9, **caractérisé en ce que** la goulotte (2) comprend un autre rouleau auxiliaire s'étendant longitudinalement (43) disposé au-dessus de l'intervalle de transport (19) et à proximité de l'intérieur (18) de la goulotte (2).
